# EUROPEAN PATENT APPLICATION

(11) **EP 4 622 073 A1**
(43) Date of publication of application: **24.09.2025**
(21) Application number: 25164043.9
(22) Date of filing: 17.03.2025
(51) Int. Cl.: H02K 7/116, B60K 7/00, B60K 17/04, F16H 1/46, F16C 3/02, F16C 19/54, F16C 33/74

(54) **HUB MOTOR CAPABLE OF ENHANCING WATERPROOF AND DUSTPROOF PERFORMANCE**

(30) Priority: 22.03.2024 TW 113202884 U
(71) Applicant: J.D Components Co., Ltd., Shou Shui Hsiang, Chang Hua Hsien 504 (TW)
(72) Inventor: HSU, Chia-Hung, CHANG HUA HSIEN, (TW); FENG, Pin-Chieh, CHANG HUA HSIEN, (TW)
(74) Representative: Straus, Alexander

(57) **Abstract**

A hub motor (10) includes a housing (20) rotatably disposed to a first shaft (40) and a second shaft (50), and a motor (30) installed in the housing (20) and having a stator (32) and a rotor (34). A reduction mechanism (60) is installed in the housing (20), including a gear shaft (61) connected with the rotor (34), a fixed bracket (62) connected with the stator (32), a movable bracket (63) disposed on the gear shaft (61) and the second shaft (50), a first ring gear (64) disposed to the fixed bracket (62), a second ring gear (65) disposed to the housing (20), multiple first planet gears (66) disposed to the movable bracket (63) and meshed with the gear shaft (61) and the first ring gear (64), and multiple second planet gears (67) disposed to the second shaft (50) and meshed with the movable bracket (63) and the second ring gear (65). By inserting a hollow tube (70) into the first shaft (40), the gear shaft (61), the movable bracket (63), and the second shaft (50), the waterproof and dustproof performance can be enhanced.

## Description

### BACKGROUND OF THE INVENTION

### 1. Field of the Invention

The present invention relates to hub motors and more particularly, to a hub motor that can enhance its waterproof and dustproof performance.

### 2. Description of the Related Art

A traditional electric-assist bicycle obtains forward propulsion by combining the rider's pedaling force with the power output from a mechanical system (such as a hub motor). This system reduces the physical strain on the rider while still providing a fitness benefit during leisure rides.

TW M621354 discloses that the rear-wheel power output mechanism involves a two-stage reduction process. First, the power undergoes a reduction through the first planet gears, then the power is transmitted to the second planet gears via the second planet bracket. After the second reduction stage, the reduced power is outputted from the output end of the housing. However, in the aforementioned patent, since the first shaft, the gear shaft, and the second shaft are hollow and not connected to each other, external contaminants (such as water or dust) can easily enter the internal parts (such as the motor or reduction mechanism) through the gap between them. This negatively affects the service life of these internal components.

### SUMMARY OF THE INVENTION

It is one objective of the present invention to provide a hub motor, which can enhance waterproof and dustproof performance to extend its service life.

To attain the above objective, the hub motor of the present invention comprises a housing, a motor, a first shaft, a second shaft, a reduction mechanism, and a hollow tube. The housing has a non-output end and an output end. The motor is installed in the housing and has a stator and a rotor rotatable with respect to the stator. The first shaft is disposed to the non-output end of the housing and allows the housing to be rotated relative thereto. Further, one end of the first shaft is inserted in the housing and fixed to the stator of the motor, and the first shaft has a first shaft hole. The second shaft is disposed to the output end of the housing and allows the housing to be rotated relative thereto. Further, the second shaft has a second shaft hole. The reduction mechanism is installed in the housing and includes a gear shaft, a fixed bracket, a movable bracket, a first ring gear, a second ring gear, a plurality of first planet gears, and a plurality of second planet gears. The gear shaft is connected to the rotor of the motor and located between the first and second shafts, and further, the gear shaft has a third shaft hole coaxially communicating with the first and second shaft holes. The fixed bracket is fixed to the stator of the motor. The movable bracket is rotatably disposed between the gear shaft and the second shaft, and the movable bracket has an annular portion, a teeth portion connected with the annular portion, and a fourth shaft hole passing through the annular portion and the teeth portion. The first ring gear is fixed to the fixed bracket. The second ring gear is fixed to the housing. The first planet gears are pivotally disposed to the annular portion of the movable bracket and meshed with the gear shaft and the first ring gear, such that when driven by the gear shaft, the first planet gears are rotated around their own and revolved around the gear shaft along the first ring gear. During this orbital motion, the first planet gears drive the movable bracket to rotate. The second planet gears are pivotally disposed to the second shaft and meshed with the teeth portion of the movable bracket and the second ring gear, such that when driven by the teeth portion of the movable bracket, the second planet gears push the second ring gear, causing the second ring gear to drive the housing to rotate as well. The hollow tube is inserted in the first shaft hole of the first shaft, the second shaft hole of the second shaft, the third shaft hole of the gear shaft, and the fourth shaft hole of the movable bracket.

It can be seen from the above that the hub motor of the present invention uses the hollow tube to eliminate the gaps between the first shaft and the gear shaft, the gear shaft and the movable bracket, as well as the movable bracket and the second shaft. This effectively prevents external contaminants (such as water or dust) from entering the interior of the housing through these gaps, thereby enhancing the service life of the overall structure.

Preferably, the first shaft further includes a first inner flange radially protruding from a periphery wall of the first shaft hole. One end of the hollow tube is abutted against the first inner flange, thereby keeping the hollow tube in place.

Preferably, the second shaft further includes a second inner flange radially protruding from a periphery wall of the second shaft hole. One end of the hollow tube is abutted against the second inner flange, thereby keeping the hollow tube in place.

Preferably, the second shaft further includes an annular groove adjacent to the second inner flange. A seal ring is placed within the annular groove and abutted against an outer surface of the hollow tube for enhancing the sealing effect between the second shaft and the hollow tube.

### BRIEF DESCRIPTION OF THE DRAWINGS

FIG. 1 is a perspective view of a hub motor of the present invention.
FIG. 2 is another perspective view of the hub motor of the present invention from different angles.
FIG. 3 is an exploded view of the hub motor of the present invention.
FIG. 4 is a sectional view of the hub motor of the present invention.

### DETAILED DESCRIPTION OF THE INVENTION

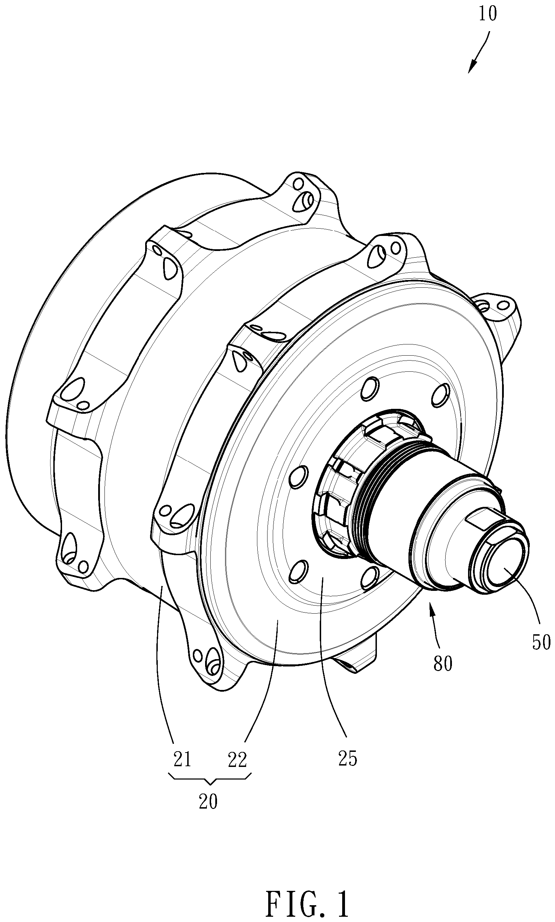

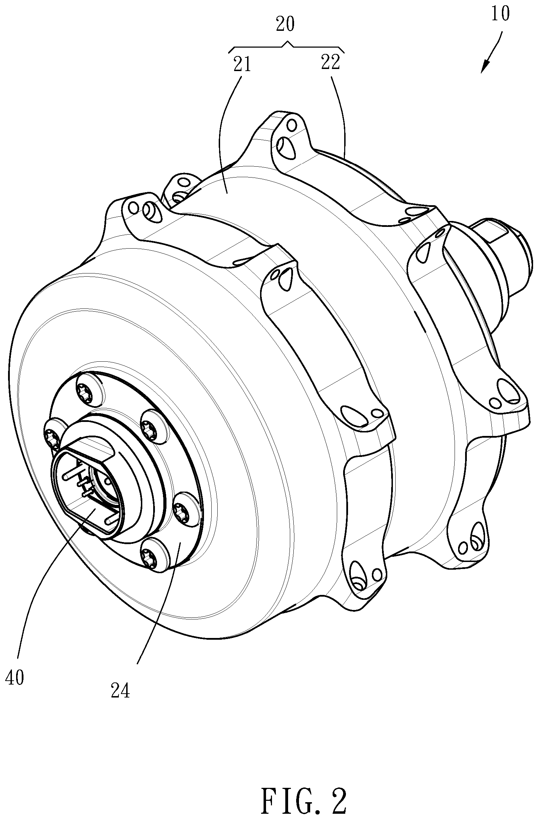

Referring to FIGS. 1 and 2, a hub motor 10 of the present invention comprises a housing 20, a motor 30, a first shaft 40, a second shaft 50, a reduction mechanism 60, and a hollow tube 70.

The housing 20 includes a shell 21 and an end cap 22. The end cap 22 is installed at the right opening of the housing 21, such that an accommodating space 23 is formed between the end cap 22 and the housing 21 for receiving most of the aforementioned components. Additionally, the shell 21 has a non-output end 24 (as shown in FIG. 2) and an output end 25 (as shown in FIG. 1).

The motor 30 is installed in the housing 20 and provided with a stator 32 and a rotor 34 rotatable with respect to the stator 32. The power supplied by a power source (such as a battery mounted on the frame, not shown) drives the rotor 34 to rotate, thereby outputting electric assist power.

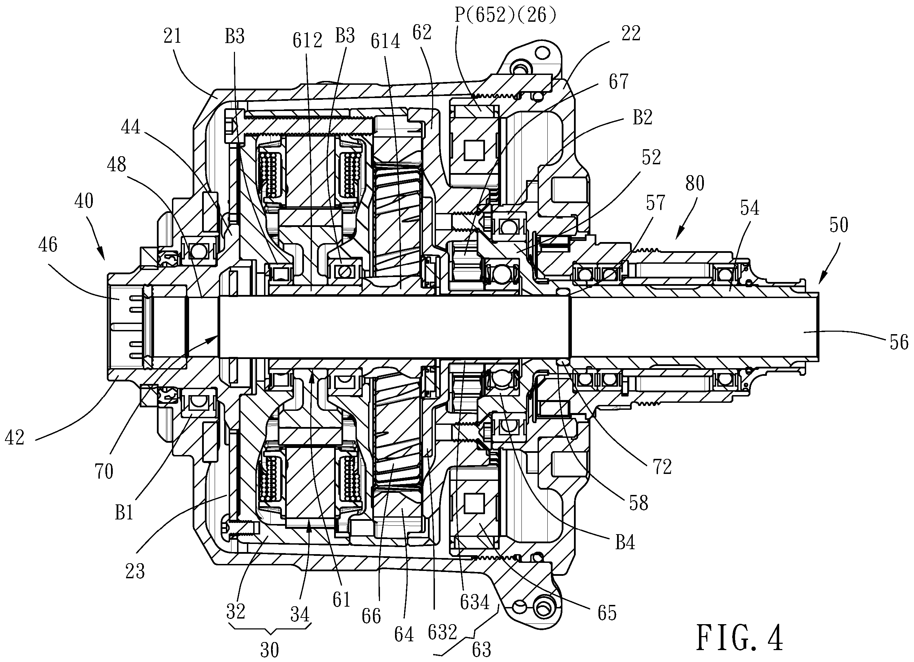

The first shaft 40 has a first shaft portion 42 and three wing portions 44 connected with the outer surface of the first shaft portion 42. The first shaft 40 is assembled at the non-output end 24 of the housing 20. A first bearing B1 (as shown in FIG. 4) is placed between the first shaft 40 and the housing 20, allowing the housing 20 to be rotated relative to the first shaft 40. Furthermore, one end of the first shaft portion 42 protrudes from the housing 20 to be fixedly assembled with the rear fork (not shown). The other end of the first shaft portion 42 is inserted into the accommodating space 23, and the wing portions 44 of the first shaft portion 42 are fixed to the stator 32 of the motor 30 by multiple screws S1, thereby securing the first shaft 40 in place. Additionally, as shown in FIG. 4, the first shaft 40 further has a first shaft hole 46 passing through two ends of the first shaft portion 42 and a first inner flange 48 radially protruding from the periphery wall of the first shaft hole 46.

The second shaft 50 includes a disc portion 52, a second shaft portion 54 connected with the disc portion 52, and a second shaft hole 56 passing through the disc portion 52 and the second shaft portion 54. The second shaft 50 is assembled at the output end 25 of the housing 20. A second bearing B2 (as shown in FIG. 4) is placed between the second shaft 50 and the end cap 22, allowing the housing 20 to be rotated relative to the second shaft 50. As shown in FIG. 4, the second shaft portion 54 protrudes from the housing 20. In addition to being fixedly assembled with the rear fork (not shown), it also accommodates a ratchet sleeve 80, which is used for assembly with a chainwheel (not shown). Additionally, the second shaft portion 54 further has a second inner flange 57 radially protruding from the periphery wall of the second shaft hole 56 and an annular groove 58 adjacent to the second inner flange 57.

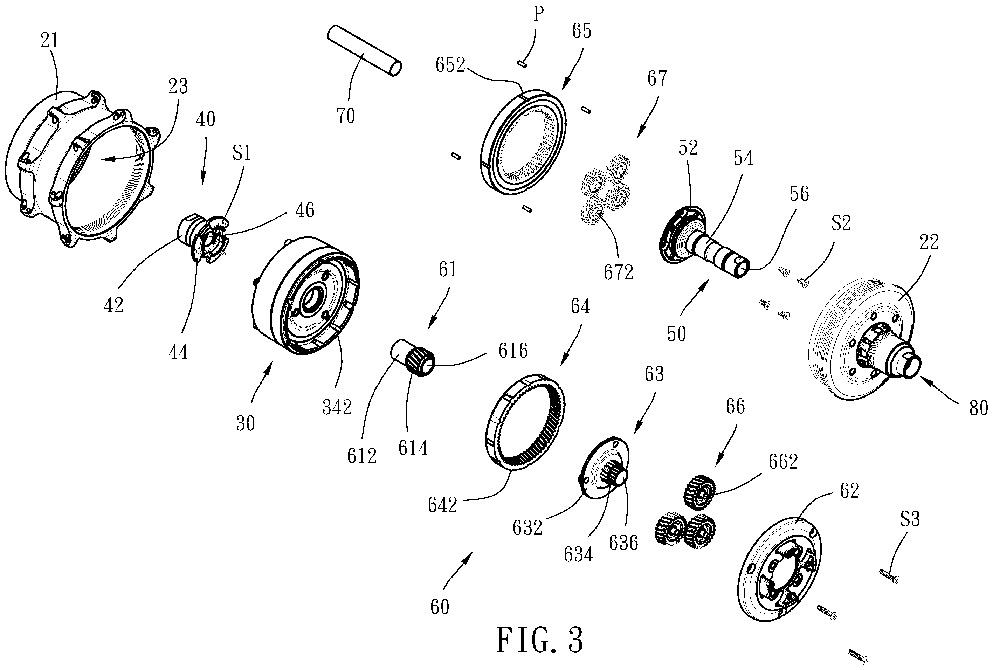

The reduction mechanism 60 is used to reduce the electric assist power generated by the rotor 34 before transmitting it out. As shown in FIGS. 3 and 4, the reduction mechanism 60 includes a gear shaft 61, a fixed bracket 62, a movable bracket 63, a first ring gear 64, a second ring gear 65, a plurality of first planet gears 66, and a plurality of second planet gears 67.

The gear shaft 61 has a third shaft portion 612, a ring gear portion 614 connected with the third shaft portion 612, and a third shaft hole 616 passing through the third shaft portion 612 and the ring gear portion 614. As shown in FIG. 4, the gear shaft 61 is coaxially disposed between the first shaft 40 and the second shaft 50. The third shaft portion 612 of the gear shaft 61 is assembled with the rotor 34 in a tight fit manner, and two third bearings B3 are placed between the third shaft portion 612 of the gear shaft 61 and the stator 32, allowing the gear shaft 61 to be rotated relative to the stator 32 under the drive of the rotor 34.

The fixed bracket 62 is secured to the disc portion 52 of the second shaft 50 on one side by using multiple screws S2, and is fixed to the stator 32 of the motor 30 on the other side by using multiple screws S3, ensuring that both the fixed bracket 62 and the second shaft 50 remain stationary.

The movable bracket 63 has an annular portion 632, a teeth portion 634 connected with the annular portion 632, and a fourth shaft hole 636 passing through the annular portion 632 and the teeth portion 634. As shown in FIG. 4, the movable bracket 63 is disposed between the gear shaft 61 and the second shaft 50, and a fourth bearing B4 is placed between the movable bracket 63 and the disc portion 52 of the second shaft 50, allowing the movable bracket 63 to be rotated relative to the second shaft 50.

The first ring gear 64 is disposed between the motor 30 and the fixed bracket 62. The outer surface of the first ring gear 64 has multiple protrusions 642. The first ring gear 64 is engaged with multiple recesses 342 of the stator 32 through the protrusions 642, ensuring that the first ring gear 64 remains stationary.

The outer surface of the second ring gear 65 has multiple second pin grooves 652, and the inner surface of the end cap 22 has multiple first pin grooves 26 (as shown in FIG. 4). By means of multiple pins P, which are engaged between the first pin grooves 26 and the second pin grooves 652, the second ring gear 65 is able to be operated synchronously with the housing 20.

The number of the first planetary gears 66 in this embodiment is three, but this is not limited thereto. The first planetary gear 66 is meshed between the ring gear portion 614 of the gear shaft 61 and the first ring gear 64, and is pivoted to the annular portion 632 of the movable bracket 63 by using a first axle 662. As a result, when the first planetary gears 66 are driven by the gear shaft 61, the first ring gear 64 remains stationary, causing the first planetary gears 66 to be both rotated on their own and revolved around the gear shaft 61 along the first ring gear 64. During this revolution, the movable bracket 63 is also driven to rotate.

The number of the second planet gears 67 in this embodiment is four, but this is not limited thereto. The second planet gear 67 is meshed between the teeth portion 634 of the movable bracket 63 and the second ring gear 65, and is pivoted to the disc portion 52 of the second shaft 50 by using a second axle 672. As a result, when the second planet gears 67 are driven by the teeth portion 634 of the movable bracket 63, the second planetary gears 67 are rotated on its own while driving the second ring gear 65 to rotate during this process., causing the second ring gear 65 to drive the housing 20 to be rotated relative to the first shaft 40 and the second shaft 50.

The hollow tube 70 is made of metal in this embodiment, but is not limited thereto. As shown in FIGS. 3 and 4, the hollow tube 70 is inserted into the first shaft hole 46 of the first shaft 40, the second shaft hole 56 of the second shaft 50, the third shaft hole 616 of the gear shaft 61, and the fourth shaft hole 636 of the movable bracket 63. One end of the hollow tube 70 is abutted against the first inner flange 48 of the first shaft 40, and the other end of the hollow tube 70 is abutted against the second inner flange 57 of the second shaft 50, thereby keeping the hollow tube 70 in place. Additionally, a seal ring 72 is placed within the annular groove 58 and abutted against the outer surface of the hollow tube 70 for enhancing the sealing effect between the second shaft 50 and the hollow tube 70.

In actual operation, the hub motor 10 of the present invention first undergoes the first stage of reduction by the first planetary gears 66. Then, the power is transmitted through the movable bracket 63 to the second planetary gears 67, which performs the second stage of reduction. Finally, the power, after the two stages of reduction, is output from the output end 25 of the housing 20. During operation, the hub motor 10 of the present invention uses the hollow tube 70 to eliminate the gaps between the first shaft 40 and the gear shaft 61, the gear shaft 61 and the movable bracket 63, as well as the movable bracket 63 and the second shaft 50. This effectively prevents external contaminants (such as water or dust) from entering the accommodation space 23 through these gaps, thereby enhancing the service life of the overall structure.

## Claims

1. A hub motor (10) **characterized in that** comprising:
a housing (20) having a non-output end (24) and an output end (25);
a motor (30) installed in the housing (20) and having a stator (32) and a rotor (34) rotatable with respect to the stator (32);
a first shaft (40) disposed to the non-output end (24) of the housing (20) and allowing the housing (20) to be rotated relative thereto, one end of the first shaft (20) being inserted in the housing (20) and fixed to the stator (32) of the motor (30), the first shaft (40) having a first shaft hole (46);
a second shaft (50) disposed to the output end (25) of the housing (20) and allowing the housing (20) to be rotated relative thereto, the second shaft (50) having a second shaft hole (56);
a reduction mechanism (60) installed in the housing (20) and including a gear shaft (61) connected to the rotor (34) of the motor (30) and located between the first and second shafts (40)(50) and having a third shaft hole (616) coaxially communicating with the first and second shaft holes (46)(56), a fixed bracket (62) fixed to the stator (32) of the motor (30), a movable bracket (63) rotatably disposed between the gear shaft (61) and the second shaft (50) and having an annular portion (632), a teeth portion (634) connected with the annular portion (632), and a fourth shaft hole (636) passing through the annular portion (632) and the teeth portion (634), a first ring gear (64) fixed to the fixed bracket (62), a second ring gear (65) fixed to the housing (20), a plurality of first planet gears (66) pivoted to the annular portion (632) of the movable bracket (63) and meshed with the gear shaft (61) and the first ring gear (64), and a plurality of second planet gears (67) pivoted to the second shaft (50) and meshed with the teeth portion (634) of the movable bracket (63) and the second ring gear (65); and
a hollow tube (70) inserted in the first shaft hole (46) of the first shaft (40), the second shaft hole (56) of the second shaft (50), the third shaft hole (616) of the gear shaft (61), and the fourth shaft hole (636) of the movable bracket (63).

2. The hub motor (10) as claimed in claim 1, **characterized in that** the first shaft (40) further includes a first inner flange (48) radially protruding from a periphery wall of the first shaft hole (46); one end of the hollow tube (70) is abutted against the first inner flange (48).

3. The hub motor (10) as claimed in claim 1, **characterized in that** the second shaft (50) further includes a second inner flange (57) radially protruding from a periphery wall of the second shaft hole (56); one end of the hollow tube (70) is abutted against the second inner flange (57).

4. The hub motor (10) as claimed in claim 1, **characterized in that** the first shaft (40) further includes a first inner flange (48) radially protruding from a periphery wall of the first shaft hole (46); the second shaft (50) further includes a second inner flange (57) radially protruding from a periphery wall of the second shaft hole (56); one end of the hollow tube (70) is abutted against the first inner flange (48), and the other end of the hollow tube (70) is abutted against the second inner flange (57).

5. The hub motor (10) as claimed in claim 3 or 4, **characterized in that** the second shaft (50) further includes an annular groove (58) adjacent to the second inner flange (57); a seal ring (72) is placed within the annular groove (58) and abutted against an outer surface of the hollow tube (70).
